(19) Europäisches Patentamt

European Patent Office

Office européen des brevets

(11) **EP 0 604 860 B1**

(12) **EUROPÄISCHE PATENTSCHRIFT**

(45) Veröffentlichungstag und Bekanntmachung des Hinweises auf die Patenterteilung:
**14.05.1997 Patentblatt 1997/20**

(51) Int. Cl.[6]: **B01J 20/12**, A01K 1/015

(21) Anmeldenummer: **93120462.2**

(22) Anmeldetag: **18.12.1993**

(54) **Sorptionsmittel**

Sorbent

Sorbant

(84) Benannte Vertragsstaaten:
**AT DE DK ES FR GB GR IT NL SE**

(30) Priorität: **21.12.1992 DE 4243340**

(43) Veröffentlichungstag der Anmeldung:
**06.07.1994 Patentblatt 1994/27**

(73) Patentinhaber: **SÜD-CHEMIE AG**
**D-80333 München (DE)**

(72) Erfinder:
• **Hähn, Reinhard Dr.**
**D-84186 Vilsheim (DE)**

• **Ahlers, Rolf Dr.**
**D-84036 Landshut (DE)**

(74) Vertreter: **Reitzner, Bruno, Dr. et al**
**Patentanwälte Dipl.-Ing. R. Splanemann**
**Dr. B. Reitzner, Dipl.-Ing. K. Baronetzky**
**Tal 13**
**80331 München (DE)**

(56) Entgegenhaltungen:
**EP-A- 0 242 683       EP-A- 0 317 436**
**WO-A-91/05464       US-A- 3 158 579**

**Beschreibung**

Die Erfindung betrifft Sorptionsmittel auf der Basis von smektitischen Tonmineralien mit ursprünglich geringem Quellvermögen. Diese Sorptionsmittel sind zur Aufnahme beliebiger Flüssigkeiten geeignet; sie eignen sich aber insbesondere als Streumittel für Heimtiere, weshalb sich die nachfolgenden Ausführungen insbesondere auf dieses Anwendungsgebiet beziehen.

Die Heimtierhaltung in einer weitgehend verstädterten Umwelt ist in zunehmendem Maße mit der Verwendung von Streumaterialien verbunden. Diese haben die Aufgabe, die von den Tieren abgegebenen Flüssigkeiten aufzusaugen und dabei möglichst die Geruchsentwicklung zu hemmen oder zu verhindern. Sie sollen ferner den halbfesten, feuchten tierischen Exkrementen und Ausscheidungen Feuchtigkeit entziehen, um damit die Geruchsentwicklung zu vermindern. Gute Streumaterialien haben darüberhinaus die Eigenschaft, die abgegebenen oder entzogenen Flüssigkeiten unter Bildung eines kompakten Klumpens aufzunehmen, der in einfacher und sparsamer Weise entfernt werden kann. Eine optimale Tierstreu hat somit ein hohes Saugvermögen.

Die auf dem Markt anzutreffenden Produkte sind einmal organische Substanzen, wie Stroh, Sägemehl, Holzspäne, Rinden, poröse Kunststoffperlen, geshreddertes Papier, Cellulosefasern, Agrarabfälle, Polyacrylate usw.; diese werden allein oder in Mischungen mit anorganischen Materialien eingesetzt. Der Nachteil der organischen Streumaterialien ist oftmals die nicht zufriedenstellende Klumpenbildung bzw. ihre Konsistenz sowie ihre Neigung zur bakteriellen Zersetzung, insbesondere im Zusammenwirken mit Feuchtigkeit.

Zum anderen sind z.B. aus den US-A-5 000115 und 4 657881 bzw. aus der EP-A-0 378 421 Streumaterialien auf Bentonitbasis bekannt, die gegenüber den organischen Streumaterialien gewisse Vorteile haben. Durch die Fähigkeit zur Quellung mit wäßrigen Flüssigkeiten sind Bentonite in der Lage, Klumpen zu bilden. Wegen dieser Klumpenbildung kann der mit Flüssigkeit benetzte Anteil des Streumaterials separat entfernt werden, wodurch Streumaterial eingespart werden kann. Mit der besonderen Struktur der Bentonite ist auch die Fähigkeit zur Adsorption von störenden Gerüchen verbunden, die bei den tierischen Ausscheidungen und Exkrementen entstehen. Bentonite lassen sich weiterhin umweltverträglich entsorgen.

Nach dem vorstehend genannten Stand der Technik werden u.a. Natriumbentonite bzw. Mischungen aus Natriumbentoniten und Calciumbentoniten als Sorptionsmittel, z.B. als Streumaterial für Heimtiere verwendet. Diese Sorptionsmittel können in granulierter Form eingesetzt werden.

Natriumbentonite sind jedoch jedoch nur regional verfügbar und werden aus diesem Grund meist nur für Spezialanwendungen, z.B. als Bindemittel für Gießereiformsand und als Verdickungs- und Thixotropiermittel für wäßrige Medien gebraucht. Andererseits gibt es in großen Mengen Calciumbentonite, die wegen des niedrigen Gehalts an dem Hauptmineral Montmorillonit auch nach einer alkalischen Aktivierung für diese Spezialanwendungen nicht geeignet sind.

Aus der EP-A-0 242 683 sind Streumittel für Heimtiere, z.B. für Katzen bekannt, welche ein anorganisches Sorptionsmittel zur Aufnahme von Flüssigkeiten, z.B. Tonmineralien und Zeolithe enthalten. Das Streumaterial kann in Form von Verbundteilchen, welche sowohl Ton-, als auch Zeolith-Teilchen enthalten, vorliegen. Als Tonmineralien können smektitische Tonmineralien, wie natürlicher Calcium-Montmorillonit, mit einem Feuchtigkeitsgehalt von nicht mehr als 15 %, z.B. von 0,5 bis 15 %, vorzugsweise von 2 bis 14 % verwendet werden. Diese Teilchen werden mit den Zeolithteilchen vermischt. Das Teilchengemisch kann dann verdichtet werden, z.B. indem es zwischen Walzen bei einem Druck von 5 bis 500 KN/cm Walzenlänge oder in einer Presse mit einem Druck von 0,5 bis 200 KN/cm$^2$ verpreßt wird. Die Preßlinge können dann zu Teilchen mit der gewünschten Größe zerkleinert werden. Durch die Verwendung des Zeoliths, der vorzugsweise einen wirksamen Porendurchmesser von 3 bis 9 Å hat, soll das Streumittel ein hohes Geruchsbindevermögen haben.

Die DE-C-3 825 905 betrifft die Verwendung eines mineralischen Stoffes zum Aufsaugen von toxischen Flüssigkeiten, Emulsionen oder Suspensionen. Der mineralische Stoff aus Tonmineralen der Gruppe Kaolinit, Illit, Serizit und/oder Smektit wurde bei Temperaturen oberhalb 650 °C gebrannt. Weiterhin weist er eine offene Porosität von mindestens 30 Vol.-% auf, und seine mittlere Porengröße liegt zwischen 0,05 und 500 μm. Es finden sich keine Hinweise auf aktivierende Zusätze.

Aus der DE-C-1 040 005 ist ein Verfahren zur Herstellung von Formkörpern aus Molekularsieben bekannt, wobei als Bindemittel ein Tonmineral verwendet wird. Es findet keine Aktivierung des Tonminerals statt.

Aus der DD-A-257 397 ist die Verwendung von Tonen als Bindemittel für Molekularsiebe bekannt, die für die Trennung von niederen Kohlenwasserstoffen verwendet werden. Es findet ebenfalls keine Aktivierung der Tone statt.

Aus der DE-A-4 109 590 ist eine Tierstreu sowie ein Verfahren zu deren Herstellung bekannt. Die Tierstreu enthält als poröses Material synthetisches Calciumsilicathydrat. Durch eine Salzzumischung wird die Geruchsentwicklung gehemmt. Über eine Aktivierung von smektitischen Tonmineralen finden sich keine Hinweise.

Aus der US-A-4 437 429 ist eine Tierstreu in Form von getrennten Schichten aus Bentonit und Zeolith bekannt. Der Zeolith dient als geruchsbindende Substanz. Eine Aktivierung des Bentonits findet nicht statt.

Aus der DE-A-4 029 591 ist ein Verfahren zur Herstellung von Adsorptionsmaterial auf Polymerbasis mit Zusatz von wasserbeständigen Substanzen bekannt. Es wird Tonerde als neutraler Füllstoff erwähnt, der in Mengen von 0 bis 80 % enthalten ist. Eine Aktivierung ist nicht erwähnt.

Aus der DE-C-29 30 060 ist ein Mittel zu Bindung und Sanierung von animalen, biologisch ausgesonderten Schlakkenprodukten bekannt, das als wirksame Substanz ein Calciumsilicathydrat enthält. Es finden sich keine Hinweise auf eine Akitvierung.

Der vorliegenden Erfindung liegt die Aufgabe zugrunde, smektitische Tonmineralien mit ursprünglich geringem Quellvermögen, die aus diesem Grund bisher noch nicht als Sorptionsmittel verwendet werden konnten, in Sorptionsmittel mit einer hohen Wasseraufnahmefähigkeit überzuführen.

Gegenstand der Erfindung sind somit Sorptionsmittel auf der Basis von smektitischen Tonmineralien mit ursprünglich geringer Wasseraufnahmefähigkeit; diese sind dadurch gekennzeichnet, daß die smektitischen Tonmineralien mit mindestens einem festen Ionenaustauscher in der Alkaliform chemisch umgesetzt sind. Es können sowohl organische als auch anorganische Ionenaustauscher verwendet werden.

Es wurde festgestellt, daß die nach dem Verfahren der EP-A-0 242 683 erhaltenen Gemische zwischen Montomorilloniten und Zeolithen nicht chemisch umgesetzt sind, wahrscheinlich deshalb, weil der Feuchtigkeitsgehalt des Montmorillonits zu gering war. Erfindungsgemäß kommt es dagegen darauf an, daß der feste Ionenaustauscher in der Alkaliform durch Ionenaustausch die smektitischen Mineralien aktiviert und dadurch ihr Quellvermögen, d.h. ihre wasseraufnahmefähigkeit, erhöht.

Vorzugsweise hat der feste Ionenaustauscher eine Ionenumtauschfähigkeit (IUF) von 50 bis 1200 mVal/100g, insbesondere von 100 bis 1100 mVal/100g.

Vorzugsweise stellt der Ionenaustauscher einen Zeolith in der Alkaliform dar, der in einer Menge von 0,5 bis 50 %, vorzugsweise von 5 bis 10 %, bezogen auf das Gesamtgewicht des Sorptionsmittels im wasserfreien Zustand, eingesetzt wird. Die Menge hängt von der IUF des verwendeteten Zeoliths ab. Vorzugsweise handelt es sich bei derartigen Zeolithen um natürliche oder synthetische Zeolithe in der Natriumform, die in einer Menge von 0,5 bis 5 %, insbesondere von 0,5 bis 3 %, bezogen auf das Gesamtgewicht des Sorptionsmittels, eingesetzt werden.

Vorzugsweise stellt das als Ausgangsmaterial verwendetete smektitische Tonmineral einen Calciumbentonit mit einer Wasseraufnahmefähigkeit (bezogen auf das bis einen Wassergehalt von 6 % getrocknete Material) von mindestens 50 Gew.-%, vorzugsweise von 60 bis 130 Gew.-%, insbesondere von 90 bis 120 Gew.-%, dar.

Die niedrige Wasseraufnahmefähigkeit der verwendeten Bentonite ist vor allem dadurch bedingt, daß diese nichtquellende Bestandteile, wie Quarz, Kaolin, Glimmer, Feldspäte, Calcit und Dolomit enthalten. Ferner ist das geringe Wasseraufnahmevermögen auch dadurch bedingt, daß der Montmorillonit hauptsächlich in Form von Calcium-Montmorillonit vorliegt. Bei der chemischen Umsetzung des Bentonits mit dem festen Ionenaustauscher in der Alkaliform findet in erster Linie ein Austausch der Calciumionen in den Zwischenschichten des Montmorillonits durch Alkaliionen, insbesondere Natriumionen, statt. Durch diesen Ionenaustausch wird die Wasseraufnahmefähigkeit des Bentonits stark erhöht, so daß er nach dem Trocknen in der Lage ist, größere Mengen an Flüssigkeit aufzunehmen.

Vorzugsweise liegt die Wasseraufnahmefähigkeit des Sorptionsmittels, d.h. des Reaktionsproduktes zwischen dem Bentonit und dem Ionenaustauscher in der Alkaliform, um mindestens 20 Prozentpunkte höher als die des Bentonits.

Das erfindungsgemäße Sorptionsmittel ist dadurch erhältlich, daß man das smektitische Tonmineral im feuchten Zustand durch intensive Verknetung mit dem festen Ionenaustauscher in Alkaliform homogenisiert und die Mischung trocknet und zerkleinert.

Die Energieaufnahme bei der Verknetung beträgt im allgemeinen 2 bis 10, vorzugsweise 3 bis 6 kWh/to Knetgemisch.

Die Ausgangsmischung der Einsatzmaterialien hat zur Gewährleistung der für die Aktivierung notwendigen Scherung vorzugsweise einen Wassergehalt von etwa 20 bis 40 Gew.-%, insbesondere 25 bis 35 Gew.-%, wobei, wenn die Einsatzmaterialien diesen Wassergehalt nicht erreichen, der Ausgangsmischung Wasser zugesetzt wird, um die angegebenen Wassergehalte zu erreichen.

Die Trocknung des Reaktionsproduktes aus smektitischem Tonmineral und Ionenaustauscher in der Alkaliform soll schonend durchgeführt werden. Diese Bedingungen kann man einstellen, wenn das Material mit nicht mehr als 150°C, vorzugsweise mit nicht mehr als 120°C belastet wird und der Restwassergehalt nicht unter 4 Gew.-%, vorzugsweise nicht unter 6 Gew.-%. fällt. Das getrocknete Produkt liegt im allgemeinen in Form von größeren Stücken vor, die in üblicher Weise gebrochen oder granuliert werden. Die Korngröße beträgt üblicherweise 0,5 bis 10 mm, vorzugsweise 2 bis 6 mm. Die bei der Zerkleinerung entstehenden Feinanteile werden in üblicher Weise abgesiebt und in die Knetvorrichtung zurückgeleitet.

Die Wasseraufnahmefähigkeit der als Ausgangsmaterialien verwendeten smektitischen Tonmineralien, die gewöhnlich unter 130 % liegt, kann erfindungsgemäß verdoppelt werden. Weiterhin wird durch die Behandlung eine Verbesserung der Klumpenbildung und eine Erhöhung der Klumpenkonsistenz des mit Flüssigkeit getränkten Materials erreicht.

Das erfindungsgemäße Sorptionsmittel hat im getrockneten Zustand vorzugsweise einen Wassergehalt von 4 bis 12, insbesondere von 4 bis 10 Gew.-%, eine Wasseraufnahmefähigkeit von mehr als 100 %, vorzugsweise von mehr als 150 % (bezogen auf das getrocknete Material mit einem Restwassergehalt von 6 %).

Das erfindungsgemäße Sorptionsmittel kann ferner mit an sich bekannten Sorptionsmitteln, z.B. den vorstehend angegebenen organischen Sorptionsmitteln, verschnitten werden. Weiterhin kann das Sorptionsmittel Weißpigmente und Desinfektionsmittel enthalten. Wird es als Tierstreu verwendet, so kann es weitere, für Tierstreu übliche Zusätze enthalten, z.B. mindestens ein fäulnishemmendes Mittel und/oder mindestens ein Tierakzeptans enthalten.

Gegenstand der Erfindung ist ferner die Verwendung des vorstehend angegebenen Sorptionsmittels als Aufsaugmittel für Flüssigkeiten (z.B. Körperflüssigkeiten, Öl, flüssige Chemikalien) sowie als Streumaterial für Heimtiere, insbesondere als Katzenstreu.

Der Wassergehalt des erfindungsgemäßen Sorptionsmittels wird wie folgt bestimmt:

10 g Sorptionsmittel werden in einer flachen Schale auf 0,01 g genau eingewogen und im Trockenschrank bei 110°C bis zur Gewichtskonstanz getrocknet (mindestens 2 Stunden). Anschließend läßt man die Probe im Exsikkator auf Raumtemperatur abkühlen und wiegt aus:

Auswertung:

$$\frac{\text{Einwaage - Auswaage}}{\text{Einwaage}} \times 100 = \text{Wassergehalt (\%)}$$

Die Wasseraufnahmefähigkeit des erfindungsgemäßen Sorptionsmittels wird nach der Methode der Firma Westinghouse (Nr. 17-A) ermittelt (vergl. Industrial Minerals, August 1992, Seite 57). Hierbei wird das bis auf einen Restwassergehalt von 6 Gew.-% getrocknete Sorptionsmittel in einen kegeligen Behälter aus feinem Drahtgewebe (lichte Maschenweite 0,25 mm = 60 mesh, Durchmesser 7 cm, Höhe 7,6 cm) eingewogen (Einwaage E = 20 g). Anschließend wird das Gesamtgewicht (Drahtgewebe + Einwaage E = $E_1$ in g) ermittelt. Das gefüllte Gewebe wird 20 Minuten in eine mit Wasser gefüllten Glasschale derart eingehängt, daß das Sorptionsmittel vollständig untertaucht. Nach 20 Minuten nimmt man das Drahtgewebe aus dem Wasser und läßt es 20 Minuten abtropfen. Unmittelbar danach wird das Gewicht des Behälters mit Inhalt ermittelt ($E_2$ in g). Die Auswertung wird wie folgt durchgeführt:

$$\text{Wasseraufnahme in Prozent} = \frac{E_2 - E_1}{E} \times 100 \, E$$

Die Erfindung ist durch die nachstehenden Beispiele in nicht einschränkender Weise erläutert.

Beispiel 1 (Vergleich)

Etwa 2 kg grubenfeuchter Ca-Rohbentonit (etwa 30 Gew.-% Wasser) mit einem Montmorillonitgehalt von 60 Gew.-%, bezogen auf die Trockenmasse und einer Wasseraufnahmefähigkeit von 110 % (bezogen auf ein getrocknetes Material mit einer Restfeuchte von 6 %) werden in einem Knetwerk mit Scherwirkung (Werner-Pfleiderer-Mischer) 5 Minuten intensiv geknetet. Die Energieaufnahme betrug 4 kWh/to. Die erhaltenen Agglomerate werden schonend bei 75°C 4 Stunden getrocknet und bei einem Wassergehalt von 6 Gew.-% in einem Backenbrecher gebrochen. Die Fraktion von 1 bis 5 mm wurde ausgesiebt, das Material mit einer Korngröße von > 5 mm wurde erneut gebrochen und gesiebt. Der Feinanteil von < 1 mm wurde in die Knetvorrichtung zurückgeleitet.

Die erhaltenen Werte sind in der nachstehenden Tabelle angegeben.

Beispiel 2

Die Arbeitsweise von Beispiel 1 wurde mit der Abweichung wiederholt, daß dem grubenfeuchten Rohbentonit 15 g, 30 g bzw. 60 g eines synthetischen Natriumsilicats mit Schichtstruktur der Zusammensetzung $Na_2Si_2O_5$ (Handelsprodukt SKS-6 der Firma Hoechst AG) zugesetzt wurden. Das Schichtsilicat SKS-6 hatte eine Wasseraufnahmefähigkeit von 122 % und eine IUF von 1000 bis 1100 mVal/100g. Die Werte für den Wassergehalt und die Wasseraufnahmefähigkeit sind in der nachstehenden Tabelle angegeben.

Beispiel 3

Die Arbeitsweise von Beispiel 1 wurde mit der Abweichung wiederholt, daß dem grubenfeuchten Calciumbentonit 34 g, 68 g, 138 g und 206 g eines synthetischen Zeoliths A in der Natriumform (Handelsbezeichnung Wessalith P der Firma Degussa) zugesetzt wurden. Die Wasseraufnahmefähigkeit von Wessalith P beträgt 57 %, seine IUF 570 mVal/100g.

Die Ergebnisse sind in der nachstehenden Tabelle angegeben.

Beispiel 4

Die Arbeitsweise von Beispiel 1 wurde mit der Abweichung wiederholt, daß dem grubenfeuchten Calciumbentonit 100 g synthetischer Na-Magadiit (ein Natriumsilicat mit Schichtstruktur und der Formel $Na_7O_{13}(OH)_3 \times 3\ H_2O$) zugesetzt wurden. Der Magadiit hatte eine Wasseraufnahmefähigkeit von 124 % und eine IUF von etwa 80 mVal/100g.
Die Ergebnisse sind in der nachstehenden Tabelle angegeben.

Beispiel 5

Die Arbeitsweise von Beispiel 1 wurde mit der Abweichung wiederholt, daß dem grubenfeuchten Calciumbentonit 100 g bzw. 200 g eines organischen Ionenaustauschers auf der Basis von Polystyrolsulfonsäure in der Na-Form (Handelsbezeichnung Lewatit S 100 der Firma Bayer AG) zugesetzt wurden. Der Ionenaustauscher hatte eine Wasseraufnahmefähigkeit von 2 % und eine IUF von 170 mVal/100g.
Die Ergebnisse sind in der nachstehenden Tabelle angegeben.

Beispiel 6 (Vergleich)

Nach der Arbeitsweise der EP-A-0 242 683 wurde unter Verwendung von 2 kg Calciumbentonit mit einem Feuchtigkeitsgehalt von 15 % und 60 g Wessalith P eine Mischung hergestellt. Die Mischung wurde in einer hydraulischen Presse mit einem Druck von 35 bzw. 70 kN/cm$^2$ verpreßt und wie nach Beispiel 1 weiterbehandelt.
Die Ergebnisse sind in der nachstehenden Tabelle angegeben. Man erkennt, daß die Wasseraufnahmefähigkeit des erhaltenen Produkts niedriger ist als die der erfindungsgemäßen Produkte.

Tabelle

| Bsp. | einges. Material | | H$_2$O-Gehalt (%) | Wasseraufnahmefähigkeit (%) |
|------|------------------|------|-------------------|-----------------------------|
| 1 | Ca-Bentonit unbehandelt | | 6,7 | 115 |
| 2 | SKS-6 | 0,75 % | 7,8 | 148 |
| | | 1,5 % | 6,3 | 224 |
| | | 3,0 % | 8,8 | 282 |
| 3 | Wessalith P | 1,7 % | 5,3 | 183 |
| | | 3,4 % | 5,5 | 220 |
| | | 6,9 % | 5,8 | 252 |
| | | 10,3 % | 8,2 | 196 |
| 4 | Na-Magadiit | 5,0 % | 5,3 | 148 |
| 5 | Lewatit S 100 | 5,0 % | 8,9 | 134 |
| | | 10,0 % | 7,3 | 209 |
| 6 | Ca-Bentonit + Wessalith P | 3,0 % | 15,0 | 135 (35 kN/cm$^2$) |
| | | 3,0 % | 15,0 | 131 (70 kN/cm$^2$) |

**Patentansprüche**

1. Sorptionsmittel auf der Basis von smektitischen Tonmineralien mit ursprünglich geringer Wasseraufnahmefähigkeit, dadurch gekennzeichnet, daß die smektitischen Tonmineralien mit mindestens einem festen Ionenaustauscher in der Alkaliform chemisch umgesetzt sind.

2. Sorptionsmittel nach Anspruch 1, dadurch gekennzeichnet, daß der feste Ionenaustauscher eine Ionenumtauschfähigkeit (IUF) von 50 bis 1200 mVal/100g, vorzugsweise von 100 bis 1100 mVal/100g, hat.

3. Sorptionsmittel nach Anspruch 1 oder 2, dadurch gekennzeichnet, daß der Ionenaustauscher einen Zeolith in der Alkaliform darstellt, der in einer Menge von 0,5 bis 50 %, vorzugsweise von 5 bis 10 %, bezogen auf das Gesamtgewicht des Sorptionsmittels im wasserfreien Zustand, eingesetzt wird.

4. Sorptionsmittel nach einem der Ansprüche 1 bis 3, dadurch gekennzeichnet, daß der Ionenaustauscher einen Zeolith in der Natriumform darstellt, der in einer Menge von 0,5 bis 5 %, insbesondere von 0,5 bis 3 %, bezogen auf das Gesamtgewicht des Sorptionsmittels im wasserfreien Zustand, eingesetzt wird.

5. Sorptionsmittel nach einem der Ansprüche 1 bis 4, dadurch gekennzeichnet, daß das als Ausgangsmaterial verwendete smektitische Tonmineral einen Calciumbentonit mit einer Wasseraufnahmefähigkeit (bezogen auf das bis einen Wassergehalt von 6 % getrocknete Material) von mindestens 50 Gew.-%, vorzugsweise von 60 bis 130 Gew.-%, insbesondere von 90 bis 120 Gew.-%, darstellt.

6. Sorptionsmittel nach einem der Ansprüche 1 bis 5, dadurch gekennzeichnet, daß seine Wasseraufnahmefähigkeit um mindestens 20 Prozentpunkte höher als die des als Ausgangsmaterial verwendeten smektitischen Tonminerals.

7. Sorptionsmittel nach einem der Ansprüche 1 bis 6, dadurch gekennzeichnet, daß es im getrockneten Zustand einen Wassergehalt von 4 bis 12, insbesondere von 4 bis 10 Gew.-%, eine Wasseraufnahmefähigkeit von mehr als 100 %, vorzugsweise von mehr als 150 % (bezogen auf das getrocknete Material mit einem Restwassergehalt von 6 %), hat.

8. Sorptionsmittel nach einem der Ansprüche 1 bis 7, dadurch gekennzeichnet, daß es weitere, für Tierstreu übliche Zusätze enthält.

9. Sorptionsmittel nach einem der Ansprüche 1 bis 8, dadurch gekennzeichnet, daß es in einer Korngröße von 0,5 bis 10 mm, vorzugsweise von 2 bis 6 mm, vorliegt.

10. Sorptionsmittel nach einem der Ansprüche 1 bis 9, dadurch gekennzeichnet, daß es mindestens ein fäulnishemmendes Mittel und/oder mindestens ein Tierakzeptans enthält.

11. Sorptionsmittel nach einem der Ansprüche 1 bis 10, dadurch erhältlich, daß man das smektitische Tonmineral in feuchtem Zustand durch intensive Verknetung mit dem festen Ionenaustauscher in der Alkaliform homogenisiert und die Mischung trocknet und zerkleinert.

12. Sorptionsmittel nach einem der Ansprüche 1 bis 11, dadurch gekennzeichnet, daß die Energieaufnahme bei der Verknetung 2 bis 10, vorzugsweise 3 bis 6 kWh/to Knetgemisch beträgt.

13. Sorptionsmittel nach einem der Ansprüche 1 bis 11, dadurch gekennzeichnet, daß die Ausgangsmischung der Einsatzmaterialien einen Wassergehalt von etwa 20 bis 40 Gew.-%, vorzugsweise von 25 bis 35 Gew.-% hat.

14. Verwendung des Sorptionsmittels nach einem der Ansprüche 1 bis 11 als Aufsaugmittel für Flüssigkeiten sowie als Streumaterial für Heimtiere, insbesondere als Katzenstreu.

## Claims

1. A sorbent based on smectitic clay minerals with originally having a low water-absorption capacity, characterised in that the smectitic clay minerals are converted chemically into the alkaline form with at least one solid ion exchanger.

2. A sorbent according to Claim 1, characterised in that the solid ion exchanger has an ion-exchange capacity (IEC) of 50 to 1200 mVal/100g, preferably 100 to 1100 mVal/100g.

3. A sorbent according to Claim 1 or 2, characterised in that the ion exchanger is an alkaline zeolite, which is used in a quantity of 0.5 to 50 %, preferably 5 to 10 %, in relation to the total weight of the sorbent in the anhydrous condition.

4. A sorbent according to any one of Claims 1 to 3, characterised in that the ion exchanger is a sodium zeolite, which is used in a quantity of 0.5 to 5 %, in particular 0.5 to 3 %, in relation to the total weight of the sorbent in the anhydrous condition.

5. A sorbent according to any one of Claims 1 to 4, characterised in that the smectitic clay mineral used as starting material is a calcium bentonite with a water-absorption capacity (in relation to the material dried to a water content of 6 %) of at least 50 % by weight, preferably 60 to 130 % by weight, in particular 90 to 120 % by weight.

6. A sorbent according to any one of Claims 1 to 5, characterised in that its water-absorption capacity is at least 20 percentage points higher than that of the smectitic clay mineral used as the starting material.

7. A sorbent according to any one of Claims 1 to 6, characterised in that in the dried condition it has a water content of 4 to 12, in particular 4 to 10 % by weight, a water-absorption capacity of more than 100 %, preferably of more than 150 % (in relation to the dried material with a residual water content of 6 %).

8. A sorbent according to any one of Claims 1 to 7, characterised in that it contains further additives conventional for animal litter.

9. A sorbent according to any one of Claims 1 to 8, characterised in that it is present in a grain size of 0.5 to 10 mm, preferably 2 to 6 mm.

10. A sorbent according to any one of Claims 1 to 9, characterised in that it contains at least one rot-inhibiting agent and/or at least one animal acceptant agent.

11. A sorbent according to any one of Claims 1 to 10, obtained by homogenising the smectitic clay mineral in the moist condition by intensive kneading with the solid ion exchanger in an alkali form, and the mixture is dried and comminuted.

12. A sorbent according to any one of Claims 1 to 11, characterised in that the energy consumption during the kneading is 2 to 10, preferably 3 to 6 kWh/ton of kneading mixture.

13. A sorbent according to any one of Claims 1 to 11, characterised in that the starting mixture of the charge material has a water content of approximately 20 to 40 % by weight, preferably 25 to 35 % by weight.

14. Use of a sorbent according to any one of Claims 1 to 11 as an absorbent for liquids and also as litter for pets, in particular as cat litter.

**Revendications**

1. Sorbants à base de minéraux argileux de type smectite, ayant initialement un faible pouvoir d'absorption de l'eau, caractérisés en ce que les minéraux argileux de type smectite sont soumis à une réaction chimique avec au moins un échangeur d'ions solide sous forme basique.

2. Sorbant selon la revendication 1, caractérisé en ce qu'un échangeur d'ions solide a un pouvoir d'échange d'ions (IUF) de 50 à 1200 mVal/100 g, de préférence de 100 à 1100 mVal/100 g.

3. Sorbant selon la revendication 1 ou 2, caractérisé en ce que l'échangeur d'ions est une zéolite sous forme basique, qui est utilisée en une quantité de 0,5 à 50 % et de préférence de 5 à 10 % par rapport au poids total du sorbant à l'état anhydre.

4. Sorbant selon l'une des revendications 1 à 3, caractérisé en ce que l'échangeur d'ions est une zéolite sous forme sodique, qui est utilisée en une quantité de 0,5 à 5 % et en particulier de 0,5 à 3 % par rapport au poids total du sorbant à l'état anhydre.

5. Sorbant selon l'une des revendications 1 à 4, caractérisé en ce que le minéral argileux de type smectite utilisé comme matière de départ est une bentonite calcique présentant un pouvoir d'absorption de l'eau (par rapport au matériau séché jusqu'à une teneur en eau de 6 %) d'au moins 50 % en poids, de préférence de 60 à 130 % en poids et en particulier de 90 à 120 % en poids.

6. Sorbant selon l'une des revendications 1 à 5, caractérisé en ce que son pouvoir d'absorption de l'eau est d'au moins 20 points de pourcentage supérieurs à celui du minéral argileux de type smectite utilisé comme matière de départ.

7. Sorbant selon l'une des revendications 1 à 6, caractérisé en ce qu'il a, à l'état séché, une teneur en eau de 4 à 12, et en particulier de 4 à 10 % en poids, un pouvoir d'absorption de l'eau supérieur à 100 %, de préférence supérieur à 150 % (par rapport au matériau séché ayant une teneur en eau résiduelle de 6 %).

8. Sorbant selon l'une des revendications 1 à 7, caractérisé en ce qu'il contient d'autres additifs usuels dans les litières pour animaux.

9. Sorbant selon l'une des revendications 1 à 8, caractérisé en ce qu'il a une granulométrie de 0,5 à 10 mm et de préférence de 2 à 6 mm.

10. Sorbant selon l'une des revendications 1 à 9, caractérisé en ce qu'il contient au moins un agent inhibiteur de moisissures et/ou au moins un additif attirant les animaux.

11. Sorbant selon l'une des revendications 1 à 10, caractérisé en ce qu'on homogénéise le minéral argileux de type smectite à l'état humide, par malaxage intensif avec l'échangeur d'ions solide sous forme base, et on sèche le mélange et on le broie.

12. Sorbant selon l'une des revendications 1 à 11, caractérisé en ce que l'énergie nécessaire au malaxage est de 2 à 10, et de préférence de 3 à 6 kWh/t de mélanges à malaxer.

13. Sorbant selon l'une des revendications 1 à 11, caractérisé en ce que le mélange de départ des matériaux utilisés à une teneur en eau d'environ 20 à 40 % en poids, de préférence de 25 à 35 % en poids.

14. Utilisation du sorbant selon l'une des revendications 1 à 11 en tant que matériaux absorbant les liquides, et en tant que matériaux de litières pour animaux domestiques, en particulier en tant que litières pour chats.